# FASCICULE DE BREVET EUROPEEN

(11) **EP 1 902 884 B1**
(45) Date de publication et mention de la délivrance du brevet: **01.12.2010**
(21) Numéro de dépôt: 07301282.5
(22) Date de dépôt: 27.07.2007
(51) Int. Cl.: B60J 5/10, B60J 1/14

(54) **OUVRANT POUR VEHICULE AUTOMOBILE, VEHICULE AUTOMOBILE ET PROCEDE DE FABRICATION ASSOCIE.**
Öffnungselement für Kraftfahrzeug, Kraftfahrzeug und zugehöriges Herstellungsverfahren
Automobile door, associated automobile and production method.

(30) Priorité: 21.09.2006 FR 0653870
(43) Date de publication de la demande: 26.03.2008
(73) Titulaire: Peugeot Citroën Automobiles SA, 78943 Vélizy-Villacoublay Cedex (FR)
(72) Inventeur: Busson, Yvan, 25200, MONTBELIARD (FR)
(74) Mandataire: Callu Danseux, Violaine

(56) Documents cités:
- EP-A- 1 310 393
- EP-A1- 0 352 151
- EP-A1- 0 937 597
- DE-A1- 10 360 436
- DE-A1- 19 714 083
- FR-A1- 2 672 017
- FR-A1- 2 701 686
- US-A- 2 742 249
- US-A- 4 773 700

## Description

La présente invention concerne un ouvrant pour véhicule automobile, du type comprenant :
- un panneau d'obturation d'une ouverture ménagée dans la caisse du véhicule, le panneau présentant au moins un bord d'articulation à la caisse; et
- une tôle de renfort du bord d'articulation, rapportée sur le panneau, la tôle portant au moins un organe d'articulation de l'ouvrant ;
où l'ouvrant comprend un bandeau de liaison en matière plastique appliqué sur le bord d'articulation, la tôle de renfort étant noyée au moins partiellement dans le bandeau de liaison , et en ce que le bandeau comprend un corps appliqué sur le panneau.

Un tel ouvrant est connu du document DE 10360436A.

Elle s'applique par exemple aux hayons de véhicules automobiles.

Un but de l'invention est d'obtenir un ouvrant de véhicule automobile présentant une tôle de renfort pour l'articulation de l'ouvrant sur la caisse du véhicule automobile, qui prévoit le guidage de cable sur le bandeau.

A cet effet, l'invention a pour objet un ouvrant du type précité, caractérisé en ce que le bandeau de liaison en matière plastique appliqué sur le bord d'articulation comprend au moins une agrafe de guidage d'un cheminement électrique qui fait saillie par rapport au corps, la ou chaque agrafe étant venue de matière avec le corps.

L'ouvrant selon l'invention peut comprendre l'une ou plusieurs des caractéristiques suivantes, prise(s) isolément ou suivant toutes combinaisons techniquement possibles :
- le panneau présente une surface extérieure et une surface intérieure, le bandeau formant une chape enserrant le panneau entre la surface extérieure et la surface intérieure;
- le bandeau comprend une région intermédiaire interposée entre le panneau et la tôle de renfort, et une région extérieure couvrant au moins partiellement la tôle de renfort ;
- l'organe d'articulation fait saillie extérieurement à travers la région extérieure ; et
- le panneau est une vitre.

L'invention a en outre pour objet un véhicule automobile, caractérisé en ce qu'il comprend une caisse délimitant une ouverture, et un premier ouvrant selon tel que défini ci-dessus, articulé sur la caisse au voisinage de l'ouverture.

Le véhicule peut comprendre la caractéristique selon laquelle il comprend un ouvrant inférieur articulé sur la caisse, le premier ouvrant formant un ouvrant supérieur articulé sur l'ouvrant inférieur par l'intermédiaire de charnières.

L'invention sera mieux comprise à la lecture de la description qui va suivre, donnée uniquement à titre d'exemple, et faite en se référant aux dessins annexés, sur lesquels :
- la Figure 1 est une vue en perspective arrière de l'extrémité arrière d'un véhicule automobile comprenant un ouvrant selon l'invention ;
- la Figure 2 est une vue de dessus de l'ouvrant représenté sur la Figure 1, le becquet ayant été retiré;
- la Figure 3 est une vue en perspective de dessus de l'extrémité droite du bord d'articulation de l'ouvrant de la Figure 2 ; et
- la Figure 4 est une vue en coupe selon le plan vertical IV-IV de la Figure 3.

Dans tout ce qui suit, les orientations sont les orientations habituelles d'un véhicule automobile. Ainsi, les termes « longitudinal », « transversal », « avant », « arrière », « gauche », « droit », « supérieur », « inférieur », « extérieur », « intérieur » s'entendent par rapport au sens normal de circulation du véhicule et à la position d'un conducteur.

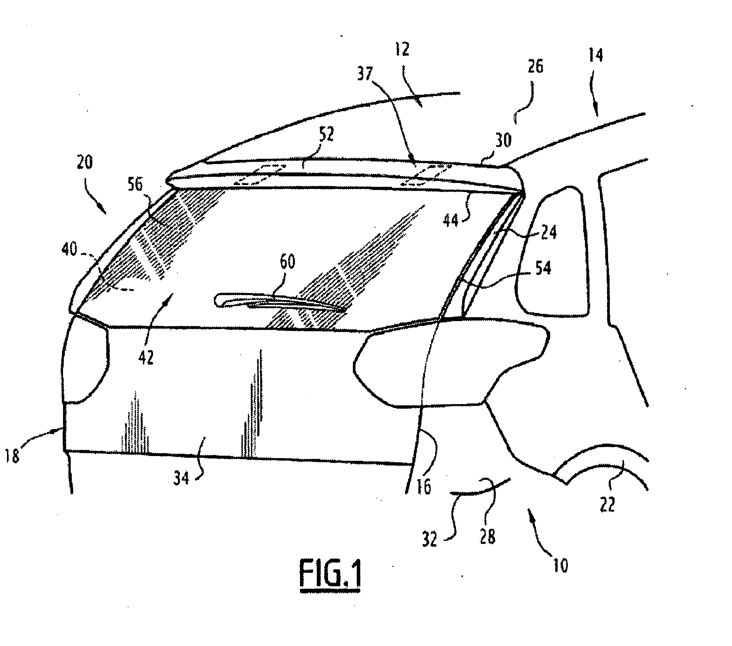

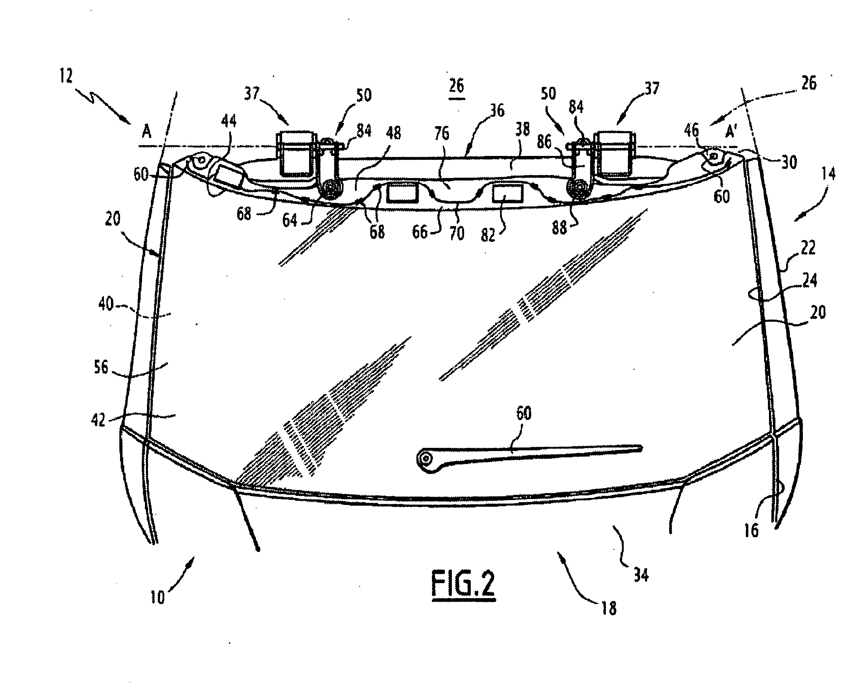

Un ensemble arrière 10 d'un véhicule automobile 12 selon l'invention est représenté sur les Figures 1 et 2.

En référence à la Figure 1, l'ensemble arrière 10 comprend des éléments de caisse 14 délimitant une ouverture arrière 16. Cette ouverture 16 est recouverte par un ouvrant inférieur 18 articulé sur les éléments de caisse 14 et par un ouvrant supérieur 20 selon l'invention articulé sur les éléments de caisse 14 par l'intermédiaire de l'ouvrant inférieur 18.

De manière classique, les éléments de caisse 14 comprennent un flanc gauche (non représenté) et un flanc droit 22 définissant chacun un bord arrière 24 sensiblement vertical. Les éléments 14 comprennent en outre un pavillon supérieur 26 et un plancher 28 définissant chacun un bord arrière horizontal respectivement 30 et 32.

L'ouverture arrière 16 est définie entre les bords arrières verticaux 24 et les bords arrières horizontaux 30, 32. Elle débouche dans l'habitacle du véhicule automobile 12 au niveau du coffre.

L'ouvrant inférieur 18 comprend un panneau métallique inférieur 34, une ossature 36 visible partiellement sur la Figure 2, et deux charnières 37 d'articulation sur le bord arrière 30 du pavillon 26.

Le panneau 34 s'étend transversalement entre les flancs 22 du véhicule. Il s'étend en hauteur depuis le plancher 28 jusqu'à environ la moitié de l'ouverture arrière 16.

L'ossature 36 comprend deux montants latéraux (non visibles) s'étendant vers le pavillon 26 le long des bords arrière 24 des flancs 22, et une traverse supérieure 38 s'étendant le long du bord arrière 30 supérieur du pavillon 26. Les montants, la traverse 38, et le panneau inférieur 34 délimitent entre eux un passage 40 obturé par l'ouvrant supérieur 20 et débouchant dans l'ouverture arrière 16.

Les charnières 37 sont fixées d'une part sur la traverse 38, et d'autre part, sur le bord arrière 30.

L'ouvrant inférieur 18 est ainsi mobile en rotation autour d'un axe transversal A-A' s'étendant le long du bord arrière 30, par l'intermédiaire des charnières 37, entre une position inférieure d'obturation de l'ouverture arrière 16 et une position supérieure de libération de cette ouverture.

L'ouvrant supérieur 20 comprend un panneau de verre 42 présentant bord supérieur 44 d'articulation sur l'ouvrant inférieur 18, une tôle de renfort 46 du bord d'articulation 44, et un bandeau 48 de liaison entre le bord d'articulation 44 et la tôle de renfort 46.

L'ouvrant supérieur 20 comprend en outre des charnières 50 d'articulation sur l'ouvrant inférieur 18, et un becquet 52 de couverture du bandeau de liaison 48 et des charnières 50, visible sur la Figure 1.

Le panneau de verre 42 forme une vitre transparente d'obturation du passage 40. Il présente une largeur sensiblement égale à celle de l'ouverture arrière 16 et du passage 40. Il s'étend en hauteur entre le bord supérieur du panneau inférieur 34 et le bord arrière 30 du pavillon 26.

Le panneau de verre 42 définit ainsi une surface intérieure 54 appliquée contre les montants de l'ossature 36 et une surface extérieure 56 dirigée à l'écart de l'habitacle.

De manière classique, le panneau de verre 42 comprend des résistances électriques noyées entre la surface intérieure 54 et la surface extérieure 56. Il porte en outre un essuie-glace 60 qui fait saillie à partir de la surface extérieure 56, pour balayer cette surface.

La tôle de renfort 46 s'étend transversalement sur toute la largeur du bord d'articulation 44 du panneau de verre 42, prise entre le flanc gauche et le flanc droit 22 des éléments de caisse 14. La tôle 46 présente une hauteur très inférieure à sa largeur, par exemple au moins dix fois inférieure à sa largeur.

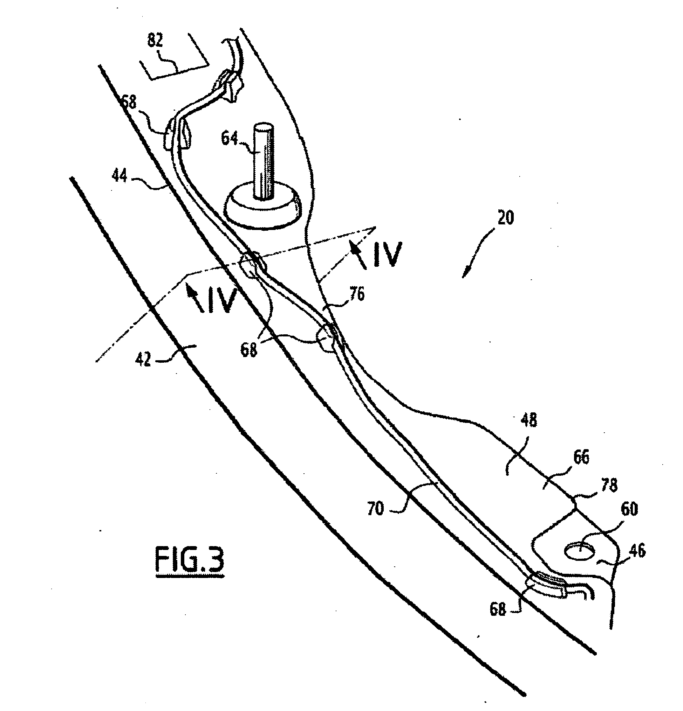

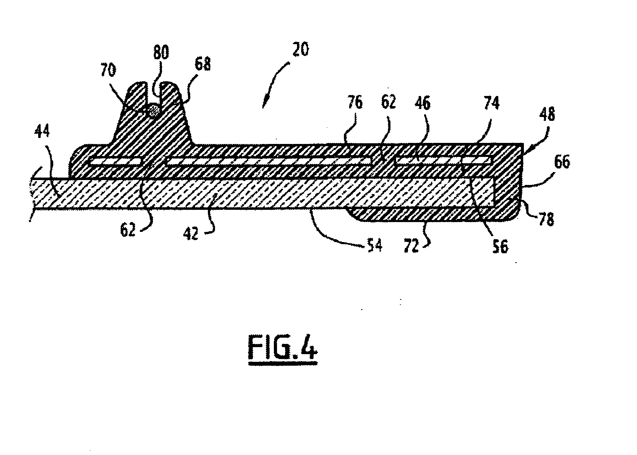

Comme illustré par les Figures 2 à 4, la tôle 46 définit des ouvertures latérales 60 de fixation du becquet 52 disposées au voisinage de son extrémité gauche et de son extrémité droite, et une pluralité de lumières traversantes 62 de passage du bandeau 48 réparties sur sa longueur et sur sa hauteur. Les lumières 62 sont visibles sur la Figure 4.

La tôle 46 porte deux goujons 64 d'articulation des charnières 50 qui font saillie vers l'extérieur à partir de la tôle 46. Les goujons 64 sont soudés sur une surface supérieure de la tôle 46 à proximité des charnières 37 d'articulation de l'ouvrant inférieur 18 sur les éléments de caisse 14.

Selon l'invention, la tôle de renfort 46 est noyée partiellement dans le bandeau de liaison 48.

Le bandeau 48 est réalisé à base de matière plastique, comme par exemple du polyuréthane. Il comprend un corps 66 formant une chape enserrant le panneau de verre 42 entre sa surface inférieure 54 et sa surface extérieure 56 et définissant une pluralité d'agrafes 68 qui font saillie vers l'extérieur à partir du corps. Les agrafes 68 sont destinées à recevoir un câble électrique 70.

Comme illustré par la Figure 4, le corps 66 comprend une région intérieure 72 appliquée sur la surface intérieure 54 du panneau 42, une région intermédiaire 74 interposée entre la surface extérieure 56 du panneau 42 et la tôle de renfort 46, et une région extérieure 76 couvrant la tôle de renfort 46.

Les régions 72, 74 et 76 sont venues de matière. La région intermédiaire 74 est reliée à la région intérieure 72 par un pont 78 chevauchant le bord supérieur du panneau de verre 42. La région intermédiaire 74 et la région extérieure 76 sont reliées entre elles à travers les lumières 62. La région intermédiaire 74 maintient ainsi la tôle 46 à l'écart du panneau de verre 42.

La région extérieure 76 couvre sensiblement totalement la tôle de renfort 46, à l'exception de deux coins latéraux gauche et droit de la tôle de renfort dans lesquels sont ménagés les ouvertures 60. Elle délimite en outre deux ouvertures de passage des goujons 64. Des connecteurs électriques 82 sont fixés sur la région extérieure 76.

Les agrafes 68 sont réparties sur toute la longueur du bandeau de liaison 48. Dans cet exemple, une agrafe est prévue environ tous les dix huit centimètres le long du bandeau de liaison 48. Chaque agrafe 68 fait saillie vers l'extérieur à partir de la région extérieure 76 du corps 66. Les agrafes 68 sont venues de matière avec le corps 66.

Chaque agrafe 68 délimite intérieurement une gorge 80 de guidage du câble 70 de section, prise dans un plan vertical longitudinal, sensiblement complémentaire à la section du câble 70. Le câble 70 est engagé dans les gorges 80 respectives des agrafes 68, le long du bandeau de liaison 48.

Les charnières 50 s'étendent de manière adjacente latéralement aux charnières 37 d'articulation de l'ouvrant inférieur 18 sur les éléments de caisse 14, entre ces charnières 37. Chaque charnière 50 comprend un pivot 84 transversal qui fait saillie à partir d'une charnière 37, vers la charnière 37 en regard, et un bras longitudinal d'articulation 86 monté rotatif autour du pivot 84.

Le bras 86 comprend une extrémité libre 88 engagée sur un goujon 64 pour sa fixation sur la tôle de renfort 46.

L'ouvrant supérieur 20 est ainsi monté rotatif sur l'ouvrant inférieur 18 par l'intermédiaire de chaque bras 86, de la tôle de renfort 46 et du bandeau de liaison 48, autour de l'axe transversal A-A' défini par les pivots 84, entre une position de fermeture du passage 40, dans laquelle le panneau de verre 42 obture le passage 40, et une position d'ouverture du passage 40, dans laquelle le panneau de verre 42 fait saillie à l'écart du passage 40 et libère le passage 40.

L'ouvrant supérieur 20 est articulé sur les éléments de caisse 14 par l'intermédiaire des charnières 37 et 50. Toutefois, l'ouverture de l'ouvrant supérieur 20 peut être effectuée indépendamment de l'ouverture de l'ouvrant inférieur 18 grâce aux charnières 50.

En fonctionnement, lorsque l'utilisateur du véhicule souhaite accéder à la totalité du coffre, il déplace l'ouvrant inférieur 18 depuis sa position inférieure d'obturation vers sa position supérieure de libération. L'ouvrant supérieur 20 se déplace alors conjointement avec l'ouvrant inférieur 18, ce qui dégage la totalité de l'ouverture arrière 16.

Lorsque l'utilisateur du véhicule souhaite avoir accès uniquement à la partie supérieure de l'ouverture arrière 16, il déplace l'ouvrant supérieur 20 vers le haut depuis sa position de fermeture vers sa position d'ouverture en maintenant l'ouvrant inférieur 18 dans sa position inférieure d'obturation.

Le procédé de fabrication de l'ensemble arrière 10 va maintenant être décrit. Initialement, l'ouvrant supérieur 20 est réalisé. A cet effet, le bord supérieur d'articulation 44 du panneau de verre 42 est disposé dans une cavité de moulage d'un moule (non représenté). La cavité est de forme sensiblement complémentaire à celle du bandeau de liaison 48.

De même, la tôle de renfort 46 est amenée dans la cavité de moulage et est maintenue en regard de la surface extérieure 56 du panneau de verre 42, à l'écart de cette surface 56, entre la surface 56 et une paroi du moule.

Puis, de la matière plastique, par exemple un mélange précurseur à base d'uréthane est injecté dans le moule préalablement chauffé à une température d'environ 100°C. Le mélange précurseur remplit la cavité de moulage autour du panneau 42, et plus particulièrement l'espace présent entre le panneau 42 et la tôle de renfort 46 et au dessus de la tôle 46. Au bout de cinq minutes environ, le mélange précurseur durcit par réticulation pour former le bandeau de liaison 48 en polyuréthane. L'ouvrant supérieur 20 est ainsi formé très rapidement, sans qu'il soit nécessaire de prévoir une étape de séchage ou de stockage. Cet ouvrant 20 peut donc être assemblé immédiatement sur un véhicule automobile 12.

L'ouvrant inférieur 18, assemblé sur les éléments de caisse 14 du véhicule automobile par fixation des charnières 37 sur le bord arrière 30, peut alors recevoir l'ouvrant supérieur 20. Celui-ci est alors plaqué sur l'ossature 36 de l'ouvrant inférieur 18. Les bras 86 sont alors montés sur les pivots 84 et fixés sur les goujons 64 solidaires de la tôle de renfort 46.

Le câble 70 est ensuite placé dans les agrafes 68. Les agrafes 68 étant formées directement par moulage en étant venues de matière avec le corps 66 du bandeau de liaison 48, il n'est pas nécessaire de référencer ni de fournir des agrafes additionnelles, ce qui réduit le coût de la pièce. En outre, le nombre d'agrafes 68 et leurs caractéristiques peuvent être ajustées en fonction de la taille du câble 70 lors de la définition de la forme de la cavité de moulage du moule.

Ensuite le becquet 52 est monté sur la région extérieure 76 du bandeau 48 par vissage dans les ouvertures de fixation 60 pour masquer le corps 66 du bandeau de liaison 48 et les charnières 50.

La présence de la région extérieure 76 au dessus du panneau de verre 42 assure une meilleure finition esthétique de la liaison entre le panneau de verre 42 et le becquet 52.

## Revendications

1. Ouvrant (20) pour véhicule automobile (12), du type comprenant :
- un panneau (42) d'obturation d'une ouverture (16) ménagée dans la caisse (14) du véhicule, le panneau (42) présentant au moins un bord (44) d'articulation à la caisse (14) ; et
- une tôle (46) de renfort du bord d'articulation (44), rapportée sur le panneau (42), la tôle (46) portant au moins un organe (64) d'articulation de l'ouvrant (20) ;
où l'ouvrant (20) comprend un bandeau de liaison (48) en matière plastique appliqué sur le bord d'articulation (44), la tôle de renfort (46) étant noyée au moins partiellement dans le bandeau de liaison (48), et en ce que le bandeau (48) comprend un corps (66) appliqué sur le panneau (42) **caractérisé en ce que** le bandeau comprend au moins une agrafe (68) de guidage d'un cheminement électrique (70) qui fait saillie par rapport au corps (66), la ou chaque agrafe (68) étant venue de matière avec le corps (66).

2. Ouvrant (20) selon la revendication 1, **caractérisé en ce que** le panneau (42) présente une surface extérieure (56) et une surface intérieure (54), le bandeau (48) formant une chape enserrant le panneau (42) entre la surface extérieure (56) et la surface intérieure (54).

3. Ouvrant (20) selon la revendication 1 ou 2, **caractérisé en ce que** le bandeau (48) comprend une région intermédiaire (74) interposée entre le panneau (42) et la tôle de renfort (46), et une région extérieure (76) couvrant au moins partiellement la tôle de renfort (46).

4. Ouvrant (20) selon la revendication 3, **caractérisé en ce que** l'organe d'articulation (64) fait saillie extérieurement à travers la région extérieure (76).

5. Ouvrant (20) selon l'une quelconque des revendications précédentes, **caractérisé en ce que** le panneau (42) est une vitre.

6. Véhicule automobile (12), **caractérisé en ce qu'**il comprend une caisse (14) délimitant une ouverture (16), et un premier ouvrant (20) selon l'une quelconque des revendications précédentes, articulé sur la caisse (14) au voisinage de l'ouverture (16).

7. Véhicule selon la revendication 6, **caractérisé en ce qu'**il comprend un ouvrant inférieur (18) articulé sur la caisse (14), le premier ouvrant (20) formant un ouvrant supérieur (20) articulé sur l'ouvrant inférieur (18) par l'intermédiaire de charnières (50).

## Claims

1. Door (20) for a motor vehicle (12), of the type comprising:
- a panel (42) for closing an opening (16) provided in the body (14) of the vehicle, the panel (42) having at least one edge (44) for articulation on the body (14); and
- a metal sheet (46) for reinforcing the articulation edge (44), the metal sheet (46) being attached to the panel (42) and carrying at least one member (64) for articulation of the door (20);
wherein the door (20) comprises a connecting fascia (48) made from plastics material, applied to the articulation edge (44), the reinforcing metal sheet (46) being at least partially embedded in the connecting fascia (48), and the fascia (48) comprises a body (66) applied to the panel (42), **characterised in that** the fascia comprises at least one clamp (68) for guiding an electrical track (70) that projects with respect to the body (66), the or each clamp (68) being made in one piece with the body (66).

2. Door (20) according to claim 1, **characterised in that** the panel (42) has an external surface (56) and an internal surface (54), the fascia (48) forming a cover gripping the panel (42) between the external surface (56) and the internal surface (54).

3. Door (20) according to claim 1 or 2, **characterised in that** the fascia (48) comprises an intermediate region (74) interposed between the panel (42) and the reinforcing metal sheet (46), and an external region (76) at least partially covering the reinforcing metal sheet (46).

4. Door (20) according to claim 3, **characterised in that** the articulation member (64) projects externally through the external region (76).

5. Door (20) according to any one of the preceding claims, **characterised in that that** panel (42) is a window pane.

6. Motor vehicle (12), **characterised in that** it comprises a body (14) delimiting an opening (16), and a first door (20) according to any one of the preceding claims, articulated on the body (14) in the vicinity of the opening (16).

7. Vehicle according to claim 6, **characterised in that** it comprises a bottom door (18) articulated on the body (14), the first door (20) forming a top door (20) articulated on the bottom door (18) by means of hinges (50).

## Patentansprüche

1. Öffnungselement (20) für ein Kraftfahrzeug (12), von der Art umfassend:
- eine Platte (42) zum Verschließen einer Öffnung (16), die in der Karosserie (14) des Fahrzeugs eingerichtet ist, wobei die Platte (42) mindestens einen Rand (44) zur Anlenkung an der Karosserie (14) aufweist; und
- ein Blech (46) zur Verstärkung des Anlenkungsrands (44), das an die Platte (42) angesetzt ist, wobei das Blech (46) mindestens ein Organ (64) zur Anlenkung des Öffnungselements (20) trägt;
wobei das Öffnungselement (20) eine Verbindungsleiste (48) aus Kunststoff umfasst, die an dem Anlenkungsrand (44) angebracht ist, wobei das Verstärkungsblech (46) mindestens teilweise in der Verbindungsleiste (48) versenkt ist und wobei die Leiste (48) einen Körper (66) umfasst, der an der Platte (42) angebracht ist,
**dadurch gekennzeichnet, dass** die Leiste mindestens eine Klammer (68) zum Führen einer elektrischen Führung (70) umfasst, die im Verhältnis zu dem Körper (66) vorsteht, wobei die oder jede Klammer (68) mit dem Körper (66) einstückig geformt ist.

2. Öffnungselement (20) nach Anspruch 1, **dadurch gekennzeichnet, dass** die Platte (42) eine Außenfläche (56) und eine Innenfläche (54) aufweist, wobei die Leiste (48) eine Abdeckung bildet, welche die Platte (42) zwischen der Außenfläche (56) und der Innenfläche (54) umklammert.

3. Öffnungselement (20) nach Anspruch 1 oder 2, **dadurch gekennzeichnet, dass** die Leiste (48) einen Zwischenbereich (74), der zwischen der Platte (42) und dem Verstärkungsblech (46) eingeschoben ist, und einen äußeren Bereich (76), der das Verstärkungsblech (46) mindestens teilweise bedeckt, umfasst.

4. Öffnungselement (20) nach Anspruch 3, **dadurch gekennzeichnet, dass** das Anlenkungsorgan (64) durch den äußeren Bereich (76) außen vorsteht.

5. Öffnungselement (20) nach einem der vorhergehenden Ansprüche, **dadurch gekennzeichnet, dass** die Platte (42) eine Fensterscheibe ist.

6. Kraftfahrzeug (12), **dadurch gekennzeichnet, dass** es eine Karosserie (14), die eine Öffnung (16) begrenzt, und ein erstes Öffnungselement (20) nach einem der vorhergehenden Ansprüche, das an der Karosserie (14) in der Nähe der Öffnung (16) angelenkt ist, umfasst.

7. Fahrzeug nach Anspruch 6, **dadurch gekennzeichnet, dass** es ein unteres Öffnungselement (18) umfasst, das an der Karosserie (14) angelenkt ist, wobei das erste Öffnungselement (20) ein oberes Öffnungselement (20) bildet, das an dem unteren Öffnungselement (18) über Scharniere (50) angelenkt ist.
